# EUROPÄISCHE PATENTSCHRIFT

(11) **EP 3 980 695 B1**
(45) Veröffentlichungstag und Bekanntmachung des Hinweises auf die Patenterteilung: **06.08.2025**
(21) Anmeldenummer: 20734839.2
(22) Anmeldetag: 04.06.2020
(51) Int. Cl.: F24D 3/08, F24D 3/18, F24D 11/02, F24D 17/02, F24D 19/10

(54) **VERFAHREN ZUM BETRIEB EINER HEIZUNGSANLAGE MIT EINER WÄRMEPUMPE UND HEIZUNGSANLAGE**
METHOD FOR OPERATING A HEATING SYSTEM WITH A HEAT PUMP AND HEATING SYSTEM
PROCÉDÉ POUR FAIRE FONCTIONNER UNE INSTALLATION DE CHAUFFAGE COMPRENANT UNE POMPE DE CHALEUR ET INSTALLATION DE CHAUFFAGE

(30) Priorität: 07.06.2019 DE 102019115508
(43) Veröffentlichungstag der Anmeldung: 13.04.2022
(73) Patentinhaber: Wolf, Peter, 26209 Hatten (DE); Jaske, Wolfgang, 49811 Lingen (DE)
(72) Erfinder: Wolf, Peter, 26209 Hatten (DE); Jaske, Wolfgang, 49811 Lingen (DE)
(74) Vertreter: Jabbusch, Matthias
(86) Internationale Anmeldenummer: PCT/EP2020/065539
(87) Internationale Veröffentlichungsnummer: WO 2020/245304

(56) Entgegenhaltungen:
- EP-A1- 3 214 377
- EP-A2- 2 410 249
- DE-A1- 102010 023 777
- DE-U1- 20 213 335

## Beschreibung

Die Erfindung betrifft ein Verfahren zum Betrieb einer Heizungsanlage mit einer Wärmepumpe, die einen Verdampfer und einen Kondensator aufweist, und mit einem Niedertemperatur-Heizungskreislauf, der einen Vorlauf und einen Rücklauf aufweist, und mit einem Heißwasserspeicher, wobei bei Anforderung von heißem Wasser für den Heißwasserspeicher das von der Wärmepumpe erzeugte Heißwasser vollständig zu dem Heißwasserspeicher geleitet wird und das aus dem Heißwasserspeicher abfließende, etwas abgekühlte Wasser dem Vorlauf des Niedertemperatur-Heizungskreislaufs zugeführt wird.

Weiterhin betrifft die Erfindung eine Heizungsanlage mit einer Wärmepumpe, die einen Verdampfer und einen Kondensator aufweist, und mit einem Niedertemperatur-Heizungskreislauf, der einen Vorlauf und einen Rücklauf aufweist, und mit einem Heißwasserspeicher.

Verfahren zum Betrieb von Heizungsanlagen sind grundsätzlich bekannt. So ist beispielsweise in der EP 3 214 377 B1 ein energieoptimiertes Verfahren zum Betrieb einer Heizungsanlage mit einem Brennwertkessel beschrieben.

Eine weitere Heizungsanlage ist in der DE10 2010 023 777 A1 beschrieben, gemäß der ein Wärmeerzeuger mit wenigstens einem Wärmespeicher und zwei Heizkreisen auf unterschiedlichen Temperaturniveaus verknüpft ist. Insbesondere sind die Heizkreise ein Niedertemperatur-Heizungskreislauf und ein Heißwasserkreislauf, denen jeweils ein Wärmespeicher zugeordnet ist, über ein Umschaltventil soll dann der eine oder der andere Wärmespeicher gespeist werden.

Beim Betrieb von Heizungsanlagen mit Wärmepumpen, die innerhalb der Heizungsanlage Verbraucher mit unterschiedlichen Temperaturniveaus betreiben müssen, wie beispielsweise einen Niedertemperatur-Heizungskreislauf und einen Heißwasserspeicher, müssen bestimmte Rahmenbedingungen beachtet werden, um einen energieoptimierten Prozess zu erreichen. Das Wasser zirkuliert im Allgemeinen unter Abkühlung in dem Niedertemperatur-Heizungskreislauf, Die im Kondensator der Wärmepumpe abgegebene Wärme setzt sich aus der Umgebung entzogener Wärme, die im Verdampfer gewonnen wird, und der Kompressionsarbeit des Kompressors in der Wärmepumpe zusammen. Je höher die zu erreichende Temperatur der abzugebenden Energie im Kondensator ist, desto größer ist der Anteil der Kompressionsarbeit des Kompressors der Wärmepumpe. Damit sinkt bei Erhöhung der Abgabetemperatur auf der Sekundärleistungsseite, also am Kondensator, der Wirkungsgrad der Wärmegewinnung aus der Umgebung. Ungesteuerte Wärmepumpen haben nur einen Betriebsmodus und keine interne Steuerung wie zum Beispiel frequenzgeregelte Kompressoren oder einstellbare Drosseln. Die Steuerung der Wärmepumpe ergibt sich aus dem Zusammenspiel des Verdampfungs- und Kondensationsprozesses. Diese beiden Teilprozesse regeln sich über die Temperaturen des Angebots und die Nachfrage der Wärmeenergie.

Da Neubauten, insbesondere wenn sie nach hohem Energiestandard gebaut werden, keine hohen Heiztemperaturen für den Heizungskreislauf benötigen, ist der wärmste Verbraucher aufgrund des Schutzes vor Legionellen häufig das Duschwasser mit einer Temperatur von 65°C bis 70°C. Im Stand der Technik wird dies oftmals so gelöst, dass der Heizungskreislauf seine Wärme kaskadiert abbaut, indem zuerst das Brauchwasser über den Heißwasserspeicher erwärmt und dann einen Heizkörper und zuletzt einen Niedertemperatur-Heizungskreislauf, insbesondere eine Flächenheizung, durchläuft. In einer Variante dieses Konzepts wird das heiße Wasser nicht auf die Verbrauchstemperatur für heißes Brauchwasser gebracht, sondern das heiße Brauchwasser bei Bedarf mit einer elektrischen Widerstandsheizung auf die Endtemperatur geheizt. Wenn, wie in Neubauten oft der Fall, die Heizung bei niedrigeren Temperaturen betrieben werden kann, wird das Wasser für den Heizungskreislauf nach Durchlauf der Brauchwassererwärmung vor seinem Gebrauch zu Heizzwecken in dem Heizungskreislauf in einem Mischer auf Gebrauchstemperatur heruntergekühlt.

Aufgabe der vorliegenden Erfindung ist es, bei einem Verfahren und einer Heizungsanlage der eingangs genannten Art einen besonders energieeffizienten Betrieb durch den Einsatz einer konstruktiv einfacheren, kostengünstigeren Wärmepumpe auch für die Anwendung mit unterschiedlichen Betriebsfällen zu ermöglichen.

Die Lösung dieser Aufgabe erfolgt mit einem Verfahren mit den Merkmalen des Patentanspruchs 1 und mit einer Heizungsanlage mit den Merkmalen des Patentanspruchs 8. Bevorzugte Ausgestaltungen der Erfindung sind in den Unteransprüchen beschrieben.

Bei einem Verfahren zum Betrieb einer Heizungsanlage mit einer Wärmepumpe, die einen Verdampfer und einen Kondensator aufweist, und mit einem Niedertemperatur-Heizungskreislauf, der einen Vorlauf und einen Rücklauf aufweist, und mit einem Heißwasserspeicher, wobei bei Anforderung von heißem Wasser für den Heißwasserspeicher das von der Wärmepumpe erzeugte Heißwasser vollständig zu dem Heißwasserspeicher geleitet wird und das aus dem Heißwasserspeicher abfließende, etwas abgekühlte Wasser dem Vorlauf des Niedertemperatur-Heizungskreislaufs zugeführt wird, ist erfindungswesentlich vorgesehen, dass die Wärmepumpe bei Betrieb nur des Niedertemperatur-Heizungskreislaufs eine im Vergleich zur gleichzeitigen Wasseranforderung durch den Heißwasserspeicher größere Menge Wasser bei niedrigerer Temperatur bereitstellt und dass bei Anforderung von heißem Wasser für den Heißwasserspeicher im Rücklauf des Niedertemperatur-Heizungskreislaufs das Wasser teilweise zurück zur Wärmepumpe und teilweise in den Vorlauf des Niedertemperatur-Heizungskreislaufs geführt wird. Mit diesem Verfahren wird der Wirkungsgrad der Wärmegewinnung verbessert und es können weiter ungeregelte, einfache und dadurch robuste Wärmepumpen verwendet werden. Die optimale Versorgung der Verbraucher erfolgt durch eine hydraulische Lösung, also insbesondere durch die Regelung des Wasservolumenstroms.

Die Wärmepumpe wird in dem Zustand mit ungefähr gleichbleibender Energieabgabe gefahren. Im Betrieb nur des Niedertemperatur-Heizungskreislaufs wird eine entsprechend größere Menge Wasser bei niedrigerer Temperatur, typischerweise zwischen 30°C und 40°C, erwärmt als bei Anforderung von Wasser für den Heißwasserspeicher. Dort wird typischerweise Wasser mit einer Temperatur von 65°C oder mehr erzeugt. Entsprechend wird eine geringere Wassermenge auf diese Temperatur erwärmt, so dass der Einsatz einer ungeregelten Wärmepumpe ermöglicht wird, deren Energieabgabe im Wesentlichen gleich bleibt.

In einer bevorzugten Ausgestaltung der Erfindung weist die Wärmepumpe an der Heißwasserseite des Kondensators ein erstes 3-Wege-Ventil auf, das Anschlüsse zum Vorlauf des Niedertemperatur-Heizungskreislaufs und zum Heißwasserspeicher aufweist, wobei dieses erste 3-Wege-Ventil im Fall der Anforderung von heißem Wasser für den Heißwasserspeicher zu dem Heißwasserspeicher durchgeschaltet wird. Der Zulauf des heißen Wassers in den Niedertemperatur-Heizungskreislauf wird also auf diese Weise unterbrochen und das auf typischerweise 65°C erhitzte Wasser für den Heißwasserspeicher wird vollständig in den Heißwasserspeicher geleitet.

In einer anderen bevorzugten Ausgestaltung der Erfindung ist im Rücklauf des Niedertemperatur-Heizungskreislaufs ein erster Mischer vorgesehen, der Anschlüsse zur Wärmepumpe, zum Rücklauf des Niedertemperatur-Heizungskreislaufs und zum Vorlauf des Niedertemperatur-Heizungskreislaufs aufweist, wobei dieser erste Mischer im Fall der Anforderung von heißem Wasser für den Heißwasserspeicher den Rücklauf des Niedertemperatur-Heizungskreislaufs zu einem Teil zurück zur Wärmepumpe und zu einem Teil in den Vorlauf des Niedertemperatur-Heizungskreislaufs gibt. Dabei wird bevorzugt die Menge zurück zur Wärmepumpe gegeben, die die Wärmepumpe vorher als heißes Wasser zum Heißwasserspeicher gegeben hat. Der Überschuss wird in den Vorlauf des Niedertemperatur-Heizungskreislaufs und zwar hinter dem oben beschriebenen ersten 3-Wege-Ventil in den Vorlauf des Heizungskreislaufs eingespeist.

Weiterhin ist es bevorzugt, dass im Vorlauf des Niedertemperatur-Heizungskreislaufs ein zweiter Mischer angeordnet ist, der neben den Zu- und Abläufen in beide Richtungen des Niedertemperatur-Heizungskreislaufs eine dritte Verbindung zum Ablauf des Heißwasserspeichers hat und der bei Anforderung von heißem Wasser für den Heißwasserspeicher Wasser aus dem Rücklauf, genauer von dem ersten Mischer, und leicht abgekühltes Wasser aus dem Ablauf des Heißwasserspeichers erhält und diese beiden Teilströme mischt und die so erhaltene Wassermenge in den Vorlauf des Niedertemperatur-Heizungskreislaufs gibt.

Insgesamt wird auf diese Weise eine energieeffiziente hydraulische Temperaturregelung erreicht, die durch die Ansteuerung von 3-Wege-Ventilen und Mischern erfolgt, mit denen die Volumenströme des Wassers mit den verschiedenen Temperaturen gelenkt werden. Die 3-Wege-Ventile und Mischer können beispielsweise durch steuerbare Elektromotoren verstellt werden.

Bevorzugt wird das Wasser im Heißwasserspeicher um mehr als 20°C stärker erwärmt als das Wasser im Vorlauf des Niedertemperatur-Heizungskreislaufs. Typischerweise hat der Vorlauf des Niedertemperatur-Heizungskreislaufs eine Temperatur von 30°C bis 40°C und der Rücklauf des Niedertemperatur-Heizungskreislaufs hat typischerweise eine Temperatur von 25°C bis 35°C. Der Rücklauf ist also typischerweise etwa 3°C bis 10°C, bevorzugt typischerweise 5°C, kälter als der Vorlauf des Niedertemperatur-Heizungskreislaufs. Das Wasser im Heißwasserspeicher hat aufgrund der Legionellen-Problematik bevorzugt eine Temperatur von etwa 65°C. Grundsätzlich sind hier allerdings auch Temperaturen von 60°C bis 70°C oder auch 50°C bis 75°C denkbar.

In einer anderen bevorzugten Weiterbildung der Erfindung wird die Heizungsanlage im Sommerbetrieb zum Kühlen verwendet, wobei die Wärmepumpe einen wasserbeaufschlagten Verdampfer verwendet, dem im Sommerbetrieb der Rücklauf des Niedertemperatur-Heizungskreislaufs zugeführt wird. Bei Verwendung einer Luftwärmepumpe wird ein zusätzlicher wasserbeaufschlagter Verdampfer benötigt. Das in diesem wasserbeaufschlagten Verdampfer abgekühlte Wasser des Rücklaufes des Heizungskreislaufs wird dem Vorlauf des Niedertemperatur-Heizungskreislaufs zugeführt. Bevorzugt wird dann die so in dem zusätzlichen wasserbeaufschlagten Verdampfer der Wärmepumpe aufgenommene Wärme zur Erzeugung von Heißwasser für den Heißwasserspeicher genutzt. Unter einem wasserbeaufschlagten Verdampfer wird auch ein solebeaufschlagter Verdampfer verstanden. Bevorzugt werden dazu mit einem zweiten 3-Wege-Ventil im Vorlauf des Heizungskreislaufs und einem dritten 3-Wege-Ventil im Rücklauf des Niedertemperatur-Heizungskreislaufs der Kreislauf für den Heißwasserspeicher und der Niedertemperatur-Heizungskreislauf getrennt. Dementsprechend werden die beiden genannten 3-Wege-Ventile und auch der erste und der zweite Mischer und das erste 3-Wege-Ventil so eingestellt, dass die Wärmepumpe, insbesondere der Kondensator der Wärmepumpe einen Kreislauf ausschließlich mit dem Heißwasserspeicher bildet.

Die erfindungsgemäße Heizungsanlage mit einer Wärmepumpe, die einen Verdampfer und einen Kondensator aufweist, und mit einem Niedertemperatur-Heizungskreislauf, der einen Vorlauf und einen Rücklauf aufweist, und mit einem Heißwasserspeicher, wobei im Rücklauf des Niedertemperatur-Heizungskreislaufs vor der Wärmepumpe ein erster Mischer angeordnet ist, und wobei in dem Vorlauf des Niedertemperatur-Heizungskreislaufs ein zweiter Mischer angeordnet ist, der dazu vorgesehen und ausgelegt ist, das etwas abgekühlte Wasser aus dem Ablauf des Heißwasserspeichers zu erhalten um es in den Vorlauf des Niedertemperatur-Heizungskreislaufs abzugeben, zeichnet sich erfindungswesentlich dadurch aus, dass der erste Mischer dazu vorgesehen und ausgelegt ist, im Fall von einer Heißwasser-Anforderung für den Heißwasserspeicher einen Teil des Wassers aus dem Rücklauf des Niedertemperatur-Heizungskreislaufs in den Vorlauf des Niedertemperatur-Heizungskreislaufs abzugeben und dass der zweite Mischer dazu vorgesehen und ausgelegt ist, das Wasser aus dem Rücklauf zu erhalten und in den Vorlauf des Niedertemperatur-Heizungskreislaufs abzugeben.

Bevorzugt weist die Wärmepumpe an der Heißwasserseite ein erstes 3-Wege-Ventil auf, das Anschlüsse zum Vorlauf des Niedertemperatur-Heizungskreislaufs und zum Heißwasserspeicher aufweist, wobei dieses erste 3-Wege-Ventil dazu vorgesehen, ausgelegt und gesteuert ist, dass es im Fall der Anforderung von heißem Wasser für den Heißwasserspeicher zu dem Heißwasserspeicher durchschaltet. Der dritte Anschluss ist direkt zum Kondensator zur Wärmpumpe.

Weiterhin ist die Heizungsanlage bevorzugt so aufgebaut, dass im Rücklauf des Niedertemperatur-Heizungskreislaufs ein erster Mischer vorgesehen ist, der Anschlüsse zur Wärmepumpe, zum Rücklauf des Niedertemperatur-Heizungskreislaufs und zum Vorlauf des Niedertemperatur-Heizungskreislaufs aufweist, wobei dieser erste Mischer dazu vorgesehen und ausgelegt ist, im Fall der Anforderung von heißem Wasser für den Heißwasserspeicher den Rücklauf des Niedertemperatur-Heizungskreislaufs zu einem Teil zurück zur Wärmepumpe und zu einem Teil in den Vorlauf des Niedertemperatur-Heizungskreislaufs zu geben.

In einer weiteren Ausgestaltung der Erfindung ist die Heizungsanlage so ausgebildet, dass im Vorlauf des Niedertemperatur-Heizungskreislaufs ein zweiter Mischer angeordnet ist, der neben den Zu- und Abläufen in beide Richtungen des Niedertemperatur-Heizungskreislaufs eine dritte Verbindung zum Ablauf des Heißwasserspeichers aufweist, wobei der zweite Mischer dazu vorgesehen und ausgelegt ist, bei Anforderung von heißem Wasser für den Heißwasserspeicher Wasser aus dem Rücklauf, genauer vom ersten Mischer, und leicht abgekühltes Wasser aus dem Ablauf des Heißwasserspeichers zu erhalten und dieses Wasser in den Vorlauf des Niedertemperatur-Heizungskreislaufs zu geben.

Die Wärmepumpe ist bevorzugt eine ungeregelte Wärmepumpe. Darunter wird eine solche Wärmepumpe verstanden, die eine konstante Leistung bei festgelegten Betriebsparametern erzeugt. Der Verdampfer der Wärmepumpe ist bevorzugt ein luftbeaufschlagter Verdampfer. Die Wärmepumpe ist also bevorzugt eine Luft-Wärmepumpe.

In einer bevorzugten Ausgestaltung der Erfindung weist die Wärmepumpe neben dem ersten luftbeaufschlagten Verdampfer einen weiteren Verdampfer, nämlich einen wasserbeaufschlagten Verdampfer auf, der für einen Sommerbetrieb ausgelegt ist, und der zur Abkühlung des aus dem Rücklauf des Niedertemperatur-Heizungskreislaufs kommenden Wassers vorgesehen und ausgelegt ist. Alternativ könnte bei Einsatz eines wasserbaufschlagten Verdampfers dieser für den Heizbetrieb und den Sommerbetrieb verwendet werden. Nachfolgend wird die Erfindung anhand eines in der Zeichnung dargestellten Ausführungsbeispiels weiter erläutert. Im Einzelnen zeigen die schematischen Darstellungen in Dopplung:
- Figur 1:: eine erfindungsgemäße Heizungsanlage bei Betrieb nur des Niedertemperatur-Heizungskreislaufs;
- Figur 2:: die erfindungsgemäße Heizungsanlage bei Anforderung von Heißwasser für den Heißwasserspeicher;
- Figur 3:: die erfindungsgemäße Heizungsanlage im Sommerbetrieb mit Kühlung.

Die eingezeichneten Mischer und 3-Wege-Ventile sind so zu verstehen, dass ein schwarzes Dreieck für Durchfluss steht, ein weißes Dreieck für "gesperrt" steht und ein kariertes Dreieck für einen "Teilstrom" steht.

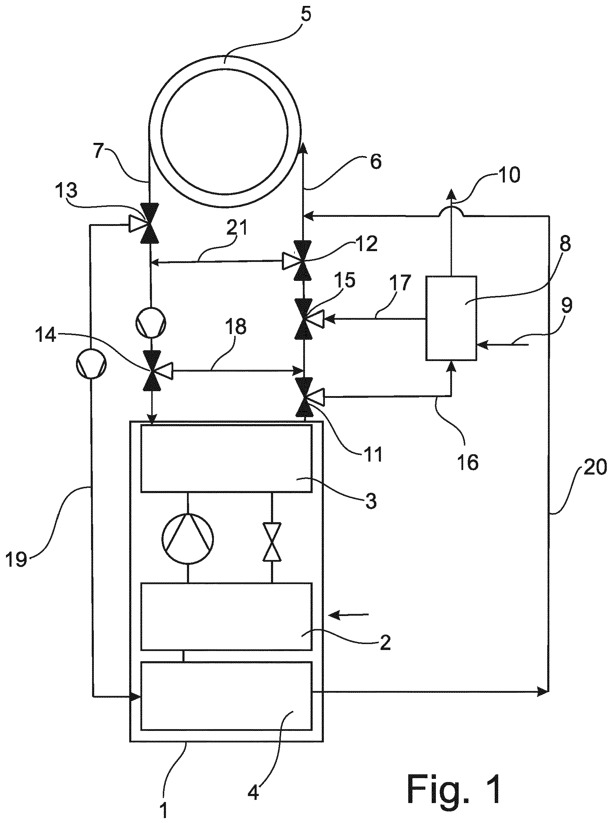

In Figur 1 ist die Wärmepumpe 1 mit dem Verdampfer 2 und dem Kondensator 3 dargestellt. Der Verdampfer 2 ist bevorzugt ein luftbeaufschlagter Verdampfer. Die Wärmepumpe 1 weist hier einen zusätzlichen zweiten Verdampfer 4 auf, nämlich einen wasserbeaufschlagten Verdampfer 4, der für den Sommerbetrieb zum Kühlen beispielsweise eines Gebäudes über den Niedertemperatur-Heizungskreislauf 5 eingesetzt wird. Die Wärmepumpe 1 ist mit einem Niedertemperatur-Heizungskreislauf 5 verbunden. Die Verbindung erfolgt hier insbesondere über einen Vorlauf 6 und einen Rücklauf 7. Insgesamt sind im Vorlauf 6 in folgender Reihenfolge von der Wärmepumpe 1 zur Heizung ein erstes 3-Wege-Ventil 11, ein zweiter Mischer 15 und ein zweites 3-Wege-Ventil 12 eingebaut. Im Rücklauf 7 sind ausgehend von der Wärmepumpe 1 ein erster Mischer 14 und ein drittes 3-Wege-Ventil 13 eingebaut. Die schwarzen Dreiecke stehen jeweils für "Durchfluss".

In der in Figur 1 gezeigten Darstellung bedient die Wärmepumpe 1 ausschließlich den Niedertemperatur-Heizungskreislauf 5. Die weißen Dreiecke der Mischer 14, 15 und 3-Wege-Ventile 11, 12, 13 stehen für "gesperrt". In diesem Heizungszustand besteht daher keine Verbindung zwischen der Wärmepumpe 1 und dem Heißwasserspeicher 8. Die Versorgung des Niedertemperatur-Heizungskreislaufs 5 mit Wärme erfolgt über den Verdampfer 2, der Wärme aus der Luft oder einem anderen wärmeübertragenden Medium übernimmt und dabei die Luft abkühlt. Diese übernommene Wärme wird über den Wärmepumpen-Prozess auf den Kondensator 3 übertragen. Die dabei entstandene Wärme wird an die Verbraucher, hier in Figur 1, nämlich an den Niedertemperatur-Heizungskreislauf 5 übergeben. Dies erfolgt im Heizbetrieb in einem Temperaturbereich von etwa 30°C bis 45°C. Die erforderliche Temperatur hängt vom Bau- und Dämmstandard des zu beheizenden Gebäudes ab.

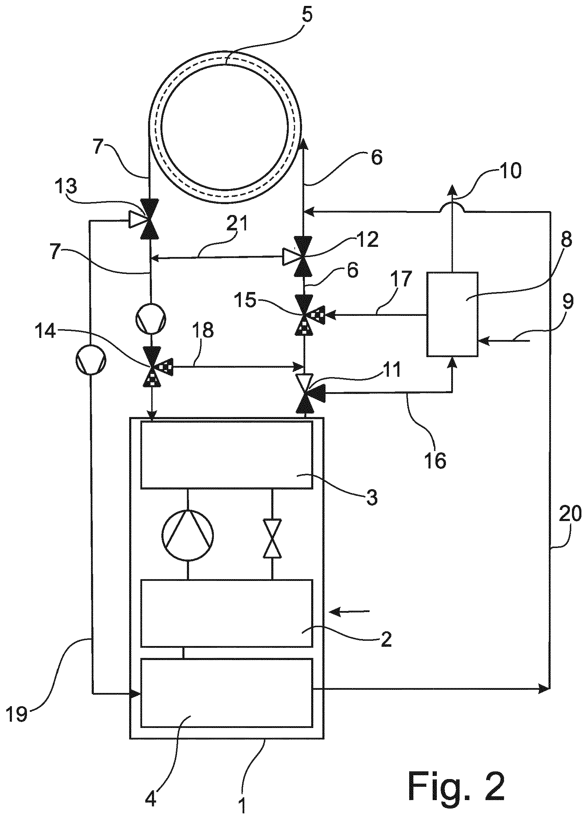

In Figur 2 ist die erfindungsgemäße Heizungsanlage im Zustand der Anforderung von Heißwasser für den Heißwasserspeicher 8 dargestellt. Wenn der Heißwasserspeicher 8 über einen Temperatursensor Energie anfordert, so werden der erste Mischer 14, der zweite Mischer 15 und das erste 3-Wege-Ventil 11 im Vergleich zum reinen Betrieb des Niedertemperatur-Heizungskreislaufs 5 in Figur 1 über Motoren oder andere entsprechende Antriebe umgeschaltet, so wie in Figur 2 dargestellt. Der Kondensator 3 erzeugt jetzt Wasser mit einer Temperatur von 65°C, jedoch in einer geringeren Menge als vorher, da vorher nur 30°C bis 45°C heißes Wasser erzeugt wurde. Das am Ausgang des Kondensators 3 im Vorlauf 6 befindliche erste 3-Wege-Ventil 11 wird im Vergleich zur Situation in Figur 1 so umgeschaltet, dass das im Kondensator 3 erzeugte etwa 65°C heiße Wasser über eine Verbindung bzw. Leitung 16 durch den Heißwasserspeicher 8 geführt wird. In dem Heißwasserspeicher 8 ist eine größere Menge heißes Wasser zum Duschen oder Ähnlichem bevorratet, das durch das umlaufende Wasser der Leitungen 16, 17 erwärmt wird. Aus dem Heißwasserspeicher 8 wird über die Leitung 10 Duschwasser abgeführt. Über die Leitung 9 wird eine entsprechende Menge kalten Wassers nachgeführt. Alternativ kann der Heißwasserspeicher 8 als Durchflusserhitzer für durchlaufendes Wasser dienen, das über die Leitung 9 zugeführt und als heißes Wasser für Dusche und anderes über die Leitung 10 von dem Heißwasserspeicher 8 weggeführt wird. Das im Heißwasserspeicher 8 etwas abgekühlte Wasser wird dann über die Verbindung 17 und einen zweiten Mischer 15, der im Vorlauf 6 angeordnet ist, in den Vorlauf 6 des Niedertemperatur-Heizungskreislaufs 5 geführt. Das im Niedertemperatur-Heizungskreislauf etwas abgekühlte Wasser wird dann über den Rücklauf 7 zum Kondensator 3 zurückgeführt, wird jedoch vor Erreichen des Kondensators 3 in einem ersten Mischer 14 aufgeteilt und ein Teilstrom wird im Rücklauf 7 dem Kondensator 3 zugeführt und ein weiterer Teilstrom wird über eine Verbindung 18 dem Vorlauf 6 zugeführt und zwar an einer Stelle zwischen dem ersten 3-Wege-Ventil 11 und dem zweiten Mischer 15, so dass über den zweiten Mischer 15 ein Teilstrom aus dem Heißwasserspeicher 8 und ein Teilstrom aus dem Rücklauf 7 zusammengeführt werden und in den Vorlauf 6 geleitet werden. Zwischen dem ersten Mischer 15 und dem Niedertemperatur-Heizungskreislauf 5 ist ein zweites 3-Wege-Ventil 12 angeordnet, das bei Wärmebedarf im Niedertemperatur-Heizungskreislauf 5 zu diesem durchgeschaltet ist. Falls kein Wärmebedarf im Niedertemperatur-Heizungskreislauf 5 besteht, wird dieser mit dem 3-Wege-Ventil 12 abgesperrt und der Wasserstrom über die Verbindung oder Leitung 21 direkt in den Rücklauf 7 zurückgeführt. Ein Vorteil dieses Verfahrens und dieser Heizungsanlage ist auch, dass der im Rücklauf 7 und über die Verbindung 18 heruntergekühlte und nicht erwärmte Teilstrom mit dem Rücklauf 7 aus dem Heißwasserspeicher 8 vermischt wird und diesen dadurch herunterkühlt. Dadurch kommt es zu einer höheren Spreizung der Temperatur und der Kondensator 3 der Wärmepumpe 1 kann dadurch effektiver arbeiten.

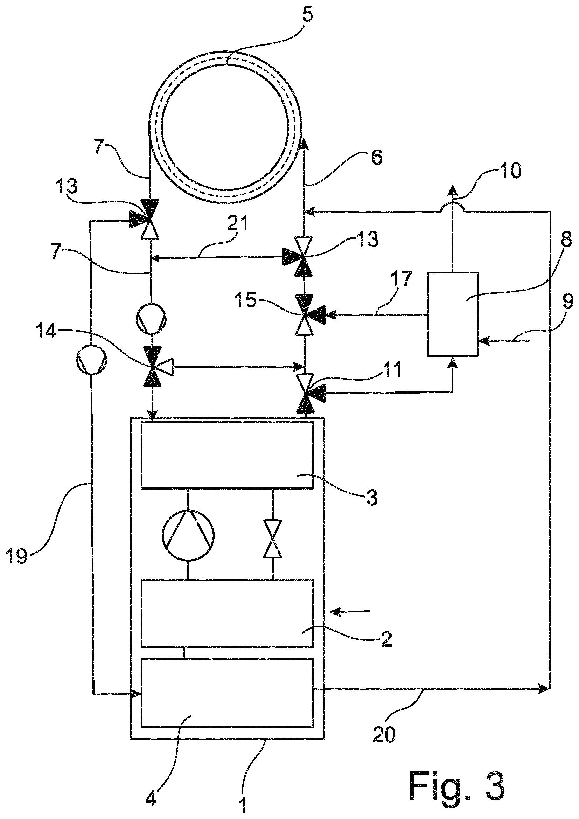

In Figur 3 ist die Heizungsanlage im Sommerbetrieb dargestellt. Die Wärmepumpe 1 arbeitet hier mit dem zweiten Verdampfer 4 und dem Kondensator 3. Die Mischer 14, 15 und die 3-Wege-Ventile 11, 12, 13 sind dabei so gestellt, dass der Niedertemperatur-Heizungskreislauf 5 nicht mit dem Kondensator 3 der Wärmepumpe 1, sondern im Rücklauf 7 über das dritte 3-Wege-Ventil 13 und die Verbindung oder Leitung 19 mit dem Eingang des Verdampfers 4 verbunden ist. In dem Verdampfer 4 wird das Wasser aus dem Rücklauf 7 abgekühlt und das abgekühlte Wasser wird dann über die Leitung oder Verbindung 20 direkt in den Vorlauf 6 und unmittelbar in den Niedertemperatur-Heizungskreislauf 5 gegeben, indem es sich unter Abkühlung der Umgebung erwärmt und das erwärmte Wasser wird im Rücklauf 7 dann wieder dem Verdampfer 4 der Wärmepumpe 1 zugeführt. Die vom Verdampfer 4 aufgenommene Wärme wird dann über den Kondensator 3 der Wärmepumpe 1 und das 3-Wege-Ventil 11 ausschließlich dem Heißwasserspeicher 8 zugeführt. Die Verbindung 17, mit der das etwas abgekühlte Wasser aus dem Heißwasserspeicher 8 abgeführt wird, wird über den zweiten Mischer 15, das dritte 3-Wege-Ventil 13, die Verbindung 21 und den ersten Mischer 14 wieder in den Kondensator 3 zurückgeführt. Es bestehen im Sommerbetrieb durch eine entsprechende Steuerung und Schaltung der Mischer und Ventile zwei vollständige getrennte Kreisläufe, nämlich einmal ein erster Kreislauf zwischen dem Kondensator 3 der Wärmepumpe 1 und dem Heißwasserspeicher 8 und zum anderen ein zweiter Kreislauf zwischen dem Verdampfer 4 der Wärmepumpe 1 und dem Niedertemperatur-Heizungskreislauf 5, der hier zum Kühlen dient.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Verfahren zum Betrieb einer Heizungsanlage mit einer Wärmepumpe (1), die einen Verdampfer (2) und einen Kondensator (3) aufweist, und mit einem Niedertemperatur-Heizungskreislauf (5), der einen Vorlauf (6) und einen Rücklauf (7) aufweist, und mit einem Heißwasserspeicher (8), wobei bei Anforderung von heißem Wasser für den Heißwasserspeicher (8) das von der Wärmepumpe (1) erzeugte Heißwasser vollständig zu dem Heißwasserspeicher (8) geleitet wird und das aus dem Heißwasserspeicher (8) abfließende, etwas abgekühlte Wasser dem Vorlauf (6) des Niedertemperatur-Heizungskreislaufs (5) zugeführt wird,
**dadurch gekennzeichnet,**
**dass** die Wärmepumpe (1) bei Betrieb nur des Niedertemperatur-Heizungskreislaufs (5) eine im Vergleich zur gleichzeitigen Wasseranforderung durch den Heißwasserspeicher (8) größere Menge Wasser bei niedrigerer Temperatur bereitstellt, und
**dass** bei Anforderung von heißem Wasser für den Heißwasserspeicher (8) im Rücklauf (7) des Niedertemperatur-Heizungskreislaufs (5) das Wasser teilweise zurück zur Wärmepumpe (1) und teilweise in den Vorlauf (6) des Niedertemperatur-Heizungskreislaufs (5) geführt wird.

2. Verfahren nach Anspruch 1, **dadurch gekennzeichnet, dass** der Kondensator (3) an der Heißwasserseite ein erstes 3-Wege-Ventil (11) aufweist, das Anschlüsse zum Vorlauf (6) des Niedertemperatur-Heizungskreislaufs (5) und zum Heißwasserspeicher (8) aufweist, wobei dieses erste 3-Wege-Ventil (11) im Fall der Anforderung von heißem Wasser für den Heißwasserspeicher (8) zu dem Heißwasserspeicher durchgeschaltet wird.

3. Verfahren nach einem der Ansprüche 1 und 2, **dadurch gekennzeichnet, dass** im Rücklauf (7) des Niedertemperatur-Heizungskreislaufs (5) ein erster Mischer (14) vorgesehen ist, der Anschlüsse zur Wärmepumpe (1), zum Rücklauf (7) des Niedertemperatur-Heizungskreislaufs (5) und zum Vorlauf (6) des Niedertemperatur-Heizungskreislaufs (5) aufweist, wobei dieser erste Mischer (14) im Fall der Anforderung von heißem Wasser für den Heißwasserspeicher (8) den Rücklauf (7) des Niedertemperatur-Heizungskreislaufs (5) zu einem Teil zurück zur Wärmepumpe (1) und zu einem Teil in den Vorlauf (6) des Niedertemperatur-Heizungskreislaufs (5) gibt.

4. Verfahren nach einem der Ansprüche 1 bis 3, **dadurch gekennzeichnet, dass** im Vorlauf (6) des Niedertemperatur-Heizungskreislaufs (5) ein zweiter Mischer (15) angeordnet ist, der neben den Zu- und Abläufen in beide Richtungen des Niedertemperatur-Heizungskreislaufs (5) eine dritte Verbindung (17) zum Ablauf des Heißwasserspeichers (8) hat und der bei Anforderung von heißem Wasser für den Heißwasserspeicher (8) Wasser aus dem Rücklauf (7), und leicht abgekühltes Wasser aus dem Ablauf des Heißwasserspeichers (8) erhält und dieses Wasser in den Vorlauf (6) des Niedertemperatur-Heizungskreislaufs (5) gibt.

5. Verfahren nach einem der vorhergehenden Ansprüche, **dadurch gekennzeichnet, dass** das Wasser im Heißwasserspeicher (8) mehr als 20° wärmer als das Wasser im Vorlauf (6) des Niedertemperatur-Heizungskreislaufs (5) erwärmt wird.

6. Verfahren nach einem der vorhergehenden Ansprüche, **dadurch gekennzeichnet, dass** die Heizungsanlage im Sommerbetrieb zum Kühlen verwendet wird, wobei die Wärmepumpe (1) einen wasserbeaufschlagten Verdampfer (4) aufweist, dem im Sommerbetrieb der Rücklauf (7) des Niedertemperatur-Heizungskreislaufs (5) zugeführt wird und das in dem wasserbeaufschlagten Verdampfer (4) abgekühlte Wasser des Rücklaufs (7) des Heizungskreislaufs dem Vorlauf (6) des Niedertemperatur-Heizungskreislaufs (5) zugeführt wird.

7. Verfahren nach Anspruch 6, **dadurch gekennzeichnet, dass** mit einem zweiten 3-Wege-Ventil (12) im Vorlauf (6) des Heizungskreislaufs (5) und einem dritten 3-Wege-Ventil (13) im Rücklauf (7) der Niedertemperatur-Heizungskreislauf (5) und der Kreislauf für den Heißwasserspeicher vollständig getrennt werden.

8. Heizungsanlage mit einer Wärmepumpe (1) , die einen Verdampfer (2) und einen Kondensator (3) aufweist, und mit einem Niedertemperatur-Heizungskreislauf (5), der einen Vorlauf (6) und einen Rücklauf (7) aufweist, und mit einem Heißwasserspeicher (8), wobei im Rücklauf (7) des Niedertemperatur-Heizungskreislaufs (5) vor der Wärmepumpe (1) ein erster Mischer (14) angeordnet ist, und wobei in dem Vorlauf (6) des Niedertemperatur-Heizungskreislaufs (5) ein zweiter Mischer (15) angeordnet ist, der dazu vorgesehen und ausgelegt ist, das etwas abgekühlte Wasser aus dem Ablauf des Heißwasserspeichers (8) zu erhalten um es in den Vorlauf (6) des Niedertemperatur-Heizungskreislaufs (5) abzugeben,
**dadurch gekennzeichnet,**
**dass** der erste Mischer (14) dazu vorgesehen und ausgelegt ist, im Fall von Heißwasseranforderung für den Heißwasserspeicher (8) einen Teil des Wassers aus dem Rücklauf (7) des Niedertemperatur-Heizungskreislaufs (5) in den Vorlauf des Niedertemperatur-Heizungskreislaufs (5) abzugeben, und dass der zweite Mischer (15) dazu vorgesehen und ausgelegt ist, das Wasser aus dem Rücklauf (7) zu erhalten um es in den Vorlauf (6) des Niedertemperatur-Heizungskreislaufs (5) abzugeben.

9. Heizungsanlage nach Anspruch 8, **dadurch gekennzeichnet, dass** die Wärmepumpe (1) an der Heißwasserseite ein erstes 3-Wege-Ventil (11) aufweist, das Anschlüsse zum Vorlauf (6) des Niedertemperatur-Heizungskreislaufs (5) und zum Heißwasserspeicher (8) aufweist, wobei dieses erste 3-Wege-Ventil (11) dazu vorgesehen und ausgelegt ist, im Fall der Anforderung von heißem Wasser für den Heißwasserspeicher zu dem Heißwasserspeicher durchzuschalten.

10. Heizungsanlage nach einem der Ansprüche 8 oder 9, **dadurch gekennzeichnet, dass** die Wärmepumpe (1) eine ungeregelte Wärmepumpe ist.

11. Heizungsanlage nach einem der Ansprüche 8 bis 10, **dadurch gekennzeichnet, dass** der Verdampfer (2) ein luftbeaufschlagter Verdampfer ist.

12. Heizungsanlage nach einem der Ansprüche 8 bis 11, **dadurch gekennzeichnet, dass** die Wärmepumpe (1) neben dem luftbeaufschlagten Verdampfer (2) einen wasserbeaufschlagten Verdampfer (4) aufweist, der für einen Sommerbetrieb ausgelegt ist und der zur Abkühlung des aus dem Rücklauf (7) des Niedertemperatur-Heizungskreislaufs (5) kommenden Wassers vorgesehen und ausgelegt ist.

## Claims

1. A method for operating a heating system with a heat pump (1) which has an evaporator (2) and a condenser (3), and with a low-temperature heating circuit (5) which has a feed (6) and a return (7), and with a hot water tank (8), wherein, when hot water is demanded for the hot water tank (8), all of the hot water generated by the heat pump (1) is conveyed to the hot water tank (8), and the slightly cooled water flowing out of the hot water tank (8) is supplied to the feed (6) of the low-temperature heating circuit (5),
**characterised in**
**that** when only the low-temperature heating circuit (5) is in operation, the heat pump (1) provides a larger quantity of water at a low temperature compared to the simultaneous water demand from the hot water tank (8), and
in that when hot water is demanded for the hot water tank (8), part of the water in the return (7) of the low-temperature heating circuit (5) is conveyed back to the heat pump (1) and part into the feed (6) of the low-temperature heating circuit (5).

2. The method according to claim 1 , **characterised in that** the condenser (3) has a first 3-way valve (11) on the hot water side, which has connections to the feed (6) of the low-temperature heating circuit (5) and to the hot water tank (8), wherein in the event of a demand for hot water for the hot water tank (8), this first 3-way valve (11) is switched through to the hot water tank.

3. The method according to any one of claims 1 and 2, **characterised in that** in the return (7) of the low-temperature heating circuit (5), a first mixer (14) is provided which has connections to the heat pump (1), to the return (7) of the low-temperature heating circuit (5), and to the feed (6) of the low-temperature heating circuit (5), wherein in the event that hot water is demanded for the hot water tank (8), this first mixer (14) returns part of the return (7) of the low-temperature heating circuit (5) back to the heat pump (1) and part to the feed (6) of the low-temperature heating circuit (5).

4. The method according to any one of claims 1 to 3, **characterised in that** in the feed (6) of the low-temperature heating circuit (5), a second mixer (15) is arranged which, in addition to the inlets and outlets in both directions of the low-temperature heating circuit (5), has a third connection (17) to the outlet of the hot water tank (8) and which, when hot water is demanded for the hot water tank (8), receives water from the return (7) and slightly cooled water from the outlet of the hot water tank, (8) and introduces this water into the feed (6) of the low-temperature heating circuit (5).

5. The method according to any one of the preceding claims, **characterised in that** the water in the hot water tank (8) is heated to more than 20° warmer than the water in the feed (6) of the low-temperature heating circuit (5).

6. The method according to any one of the preceding claims, **characterised in that** in summer operation, the heating system is used for cooling, wherein the heat pump (1) has a water-charged evaporator (4) to which the return (7) of the low-temperature heating circuit (5) is supplied in summer operation, and the water from the return (7) of the heating circuit, which has been cooled in the water-charged evaporator (4), is supplied to the feed (6) of the low-temperature heating circuit (5).

7. The method according to claim 6, **characterised in that** with a second 3-way valve (12) in the feed (6) of the heating circuit (5) and a third 3-way valve (13) in the return (7), the low-temperature heating circuit (5) and the circuit for the hot water tank are completely separated.

8. A heating system with a heat pump (1) which has an evaporator (2) and a condenser (3), and with a low-temperature heating circuit (5) which has a feed (6) and a return (7), and with a hot water tank (8), wherein upstream of the heat pump (1), a first mixer (14) is provided in the return (7) of the low-temperature heating circuit (5), and wherein in the feed (6) of the low-temperature heating circuit (5), a second mixer (15) is arranged which is provided and designed to receive the slightly cooled water from the outlet of the hot water tank (8) in order to discharge it into the feed (6) of the low-temperature heating circuit (5),
**characterised in**
**in that** the first mixer (14) is provided and designed to discharge part of the water from the return (7) of the low-temperature heating circuit (5) into the feed of the low-temperature heating circuit (5) in the event that hot water is demanded for the hot water tank (8), and **in that** the second mixer (15) is provided and designed to receive the water from the return (7) in order to discharge it into the feed (6) of the low-temperature heating circuit (5).

9. The heating system according to claim 8, **characterised in that** the heat pump (1) has a first 3-way valve (11) on the hot water side, which has connections to the feed (6) of the low-temperature heating circuit (5) and to the hot water tank (8), wherein this first 3-way valve (11) is provided and designed to switch through to the hot water tank in the event of a demand for hot water for the hot water tank.

10. The heating system according to any one of claims 8 or 9, **characterised in that** the heat pump (1) is an unregulated heat pump.

11. The heating system according to any one of claims 8 to 10, **characterised in that** the evaporator (2) is an air-charged evaporator.

12. The heating system according to any one of claims 8 to 11, **characterised in that** the heat pump (1) has, in addition to the air-charged evaporator (2), a water-charged evaporator (4) which is designed for summer operation and which is provided and designed for cooling the water coming from the return (7) of the low-temperature heating circuit (5).

## Revendications

1. Procédé, destiné à faire fonctionner une installation de chauffage, dotée d'une pompe à chaleur (1), qui comporte un évaporateur (2) et un condensateur (3) et dotée d'un circuit de chauffage basse température (5), qui comporte un circuit aller (6) et un circuit retour (7) et dotée d'un accumulateur d'eau chaude (8), lors d'une demande d'eau chaude pour l'accumulateur d'eau chaude (8), l'eau chaude générée par la pompe à chaleur (1) étant dirigée en totalité vers l'accumulateur d'eau chaude (8) et l'eau quelque peu refroidie s'écoulant de l'accumulateur d'eau chaude (8) étant alimentée par le circuit aller (6) du circuit de chauffage basse température (5),
**caractérisé**
**en ce que** lors du fonctionnement uniquement du circuit de chauffage basse température (5), la pompe à chaleur (1) met à disposition une plus grande quantité d'eau à basse température en comparaison d'une demande simultanée d'eau par l'accumulateur d'eau chaude (8) et
**en ce que** lors d'une demande d'eau chaude pour l'accumulateur d'eau chaude (8), dans le circuit retour (7) du circuit de chauffage basse température (5), l'eau est partiellement recyclée vers la pompe à chaleur (1) et partiellement conduite dans le circuit aller (6) du circuit de chauffage basse température (5).

2. Procédé selon la revendication 1, **caractérisé en ce que** le condensateur (3) comporte sur le côté eau chaude une première vanne à 3 voies (11), qui comporte des raccordements sur le circuit aller (6) du circuit de chauffage basse température (5) et sur l'accumulateur d'eau chaude (8), dans le cas d'une demande d'eau chaude pour l'accumulateur d'eau chaude (8), ladite première vanne à 3 voies (11) étant commutée vers l'accumulateur d'eau chaude.

3. Procédé selon l'une quelconque des revendications 1 et 2, **caractérisé en ce que** dans le circuit retour (7) du circuit de chauffage basse température (5) est prévu un premier mélangeur (14) qui comporte des raccordements sur la pompe à chaleur (1), sur le circuit retour (7) du circuit de chauffage basse température (5) et sur le circuit aller (6) du circuit de chauffage basse température (5), dans le cas d'une demande d'eau chaude pour l'accumulateur d'eau chaude (8), ledit premier mélangeur (14) distribuant le circuit retour (7) du circuit de chauffage basse température (5) en partie en retour vers la pompe à chaleur (1) et en partie dans le circuit aller (6) du circuit de chauffage basse température (5).

4. Procédé selon l'une quelconque des revendications 1 à 3, **caractérisé en ce que** dans le circuit aller (6) du circuit de chauffage basse température (5) est placé un deuxième mélangeur (15), qui hormis les alimentations et les écoulements du circuit de chauffage basse température (5), dispose d'une troisième liaison (17) vers l'écoulement de l'accumulateur d'eau chaude (8) et qui lors d'une demande d'eau chaude pour l'accumulateur d'eau chaude (8), reçoit de l'eau à partir du circuit retour (7), et de l'eau légèrement refroidie à partir de l'écoulement de l'accumulateur d'eau chaude (8) et distribue ladite eau dans le circuit aller (6) du circuit de chauffage basse température (5).

5. Procédé selon l'une quelconque des revendications précédentes, **caractérisé en ce que** l'eau dans l'accumulateur d'eau chaude (8) est chauffée à plus de 20° C de plus que l'eau dans le circuit aller (6) du circuit de chauffage basse température (5).

6. Procédé selon l'une quelconque des revendications précédentes, **caractérisé en ce qu'**en mode été, l'installation de chauffage est utilisée pour refroidir, la pompe à chaleur (1) comportant un évaporateur (4) sollicité par de l'eau, vers lequel en mode été est alimenté le circuit retour (7) du circuit de chauffage basse température (5) et **en ce que** l'eau du circuit retour (7) du circuit de chauffage refroidie dans l'évaporateur (4) sollicité par de l'eau est alimentée vers le circuit aller (6) du circuit de chauffage basse température (5).

7. Procédé selon la revendication 6, **caractérisé en ce qu'**avec une deuxième vanne à 3 voies (12) dans le circuit aller (6) du circuit de chauffage (5) et une troisième vanne à 3 voies (13), le circuit retour (7) du circuit de chauffage basse température (5) et le circuit pour l'accumulateur d'eau chaude sont totalement séparés.

8. Installation de chauffage, dotée d'une pompe à chaleur (1), qui comporte un évaporateur (2) et un condensateur (3) et dotée d'un circuit de chauffage basse température (5), qui comporte un circuit aller (6) et un circuit retour (7) et dotée d'un accumulateur d'eau chaude (8), dans le circuit retour (7) du circuit de chauffage basse température (5) étant placé à l'avant de la pompe à chaleur (1) un premier mélangeur (14) et dans le circuit aller (6) du circuit de chauffage basse température (5) étant placé un deuxième mélangeur (15) qui est prévu et conçu pour recevoir l'eau quelque peu refroidie à partir de l'écoulement de l'accumulateur d'eau chaude (8), pour la distribuer dans le circuit aller (6) du circuit de chauffage basse température (5),
**caractérisé**
**en ce que** le premier mélangeur (14) est prévu et conçu pour, dans le cas d'une demande d'eau chaude pour l'accumulateur d'eau chaude (8), distribuer une partie de l'eau à partir du circuit retour (7) du circuit de chauffage basse température (5) dans le circuit aller du circuit de chauffage basse température (5) et
**en ce que** le deuxième mélangeur (15) est prévu et conçu pour recevoir l'eau à partir du circuit retour (7), pour la distribuer dans le circuit aller (6) du circuit de chauffage basse température (5).

9. Installation de chauffage selon la revendication 8, **caractérisée en ce que** la pompe à chaleur (1) comporte sur le côté eau chaude une première vanne à 3 voies (11), qui comporte des raccordements sur le circuit aller (6) du circuit de chauffage basse température (5) et sur l'accumulateur d'eau chaude (8), ladite première vanne à 3 voies (11) étant prévue et conçue pour, dans le cas d'une demande d'eau chaude pour l'accumulateur d'eau chaude, se commuter vers l'accumulateur d'eau chaude.

10. Installation de chauffage selon l'une quelconque des revendications 8 ou 9, **caractérisée en ce que** la pompe à chaleur (1) est une pompe à chaleur non réglée.

11. Installation de chauffage selon l'une quelconque des revendications 8 à 10, **caractérisée en ce que** l'évaporateur (2) est un évaporateur sollicité par de l'air.

12. Installation de chauffage selon l'une quelconque des revendications 8 à 11, **caractérisée en ce qu'**hormis l'évaporateur (2) sollicité par de l'air, la pompe à chaleur (1) comporte un évaporateur (4) sollicité par de l'eau, qui est conçu pour un mode été et qui est prévu et conçu pour refroidir l'eau provenant du circuit retour (7) du circuit de chauffage basse température (5).
